# EUROPÄISCHE PATENTSCHRIFT

(11) **EP 2 972 278 B1**
(45) Veröffentlichungstag und Bekanntmachung des Hinweises auf die Patenterteilung: **14.10.2020**
(21) Anmeldenummer: 14700283.6
(22) Anmeldetag: 10.01.2014
(51) Int. Cl.: G01N 27/407

(54) **VERFAHREN ZUM HERSTELLEN EINES FESTELEKTROLYTISCHEN SENSORELEMENTS ZUR ERFASSUNG MINDESTENS EINER EIGENSCHAFT EINES MESSGASES IN EINEM MESSGASRAUM MIT HILFE EINES PLASMABRENNERS**
METHOD FOR PRODUCING A SOLID ELECTROLYTE SENSOR ELEMENT FOR DETECTING AT LEAST ONE PROPERTY OF A MEASURING GAS IN A MEASURING GAS CHAMBER WITH A PLASMA TORCH
METHODE DE PRODUCTION D'UN ELECTROLYTE SENSORELLE SOLIDE POUR DETECTER AU MOINS UNE PROPRIETE D'UN GAZ DE MESURE DANS UNE CHAMBRE A GAZ DE MESURE AVEC UNE TORCHE À PLASMA

(30) Priorität: 12.03.2013 DE 102013204204
(43) Veröffentlichungstag der Anmeldung: 20.01.2016
(73) Patentinhaber: Robert Bosch GmbH, 70442 Stuttgart (DE)
(72) Erfinder: KUEHNLEIN, Tobias, 96199 Zapfendorf (DE); MOSER, Thomas, 71701 Schwieberdingen (DE); GUENSCHEL, Harald, 96161 Gerach (DE); DIEHL, Lothar, 74376 Gemmrigheim (DE); PETERS, Christoph, 70437 Stuttgart (DE)
(86) Internationale Anmeldenummer: PCT/EP2014/050348
(87) Internationale Veröffentlichungsnummer: WO 2014/139691

(56) Entgegenhaltungen:
- EP-A1- 1 775 580
- EP-A2- 2 818 855
- DE-A1-102012 202 716
- US-A- 5 271 821
- US-A- 5 443 711
- US-A- 5 593 558
- US-A1- 2002 060 152
- US-A1- 2010 155 240
- US-A1- 2010 243 445
- US-B1- 6 409 899

## Beschreibung

### Stand der Technik

Aus dem Stand der Technik ist eine Vielzahl von Sensorelementen und Verfahren zur Erfassung mindestens einer Eigenschaft eines Messgases in einem Messgasraum bekannt. Dabei kann es sich grundsätzlich um beliebige physikalische und/oder chemische Eigenschaften des Messgases handeln, wobei eine oder mehrere Eigenschaften erfasst werden können. Die Erfindung wird im Folgenden insbesondere unter Bezugnahme auf eine qualitative und/oder quantitative Erfassung eines Anteils einer Gaskomponente des Messgases beschrieben, insbesondere unter Bezugnahme auf eine Erfassung eines Sauerstoffanteils in dem Messgas. Der Sauerstoffanteil kann beispielsweise in Form eines Partialdrucks und/oder in Form eines Prozentsatzes erfasst werden. Alternativ oder zusätzlich sind jedoch auch andere Eigenschaften des Messgases erfassbar, wie beispielsweise die Temperatur.

Beispielsweise können derartige Sensorelemente als so genannte Lambdasonden ausgestaltet sein, wie sie beispielsweise aus Konrad Reif (Hrsg.): Sensoren im Kraftfahrzeug, 1. Auflage 2010, S. 160-165, bekannt sind. Mit Breitband-Lambdasonden, insbesondere mit planaren Breitband-Lambdasonden, kann beispielsweise die Sauerstoffkonzentration im Abgas in einem großen Bereich bestimmt und damit auf das Luft-Kraftstoff-Verhältnis im Brennraum geschlossen werden. Die Luftzahl λ beschreibt dieses Luft-Kraftstoff-Verhältnis.

Aus dem Stand der Technik sind insbesondere keramische Sensorelemente bekannt, welche auf der Verwendung von elektrolytischen Eigenschaften bestimmter Festkörper basieren, also auf ionenleitenden Eigenschaften dieser Festkörper. Insbesondere kann es sich bei diesen Festkörpern um keramische Festelektrolyte handeln, wie beispielsweise Zirkoniumdioxid (ZrO₂), insbesondere yttriumstabilisiertes Zirkoniumdioxid (YSZ) und scandiumdotiertes Zirkoniumdioxid (ScSZ), die geringe Zusätze an Aluminiumoxid (Al₂O₃) und/oder Siliziumoxid (SiO₂) enthalten können.

An derartige Sensorelemente werden steigende Funktionsanforderungen gestellt. Insbesondere spielt eine schnelle Betriebsbereitschaft von Lambdasonden nach einem Motorstart eine große Rolle. Diese wird im Wesentlichen von zwei Aspekten beeinflusst. Der erste Aspekt betrifft ein rasches Aufheizen der Lambdasonde auf ihre Betriebstemperatur, die üblicherweise oberhalb von 600 °C liegt, was durch eine entsprechende Auslegung eines Heizelements oder eine Verkleinerung des zu beheizenden Bereichs erreicht werden kann. Der andere Aspekt betrifft die Robustheit gegen Thermoschock durch Wasserschlag während eines Betriebs. Der genannte Thermoschock beruht darauf, dass für einen bestimmten Zeitraum nach dem Motorstart die Temperatur im Abgasrohr unterhalb des Taupunktes für Wasser liegt, so dass der bei der Verbrennung von Kraftstoff entstehende Wasserdampf im Abgasrohr kondensieren kann. Dadurch kommt es im Abgasrohr zur Bildung von Wassertropfen. Die aufgeheizte Keramik der Lambdasonde kann durch Auftreffen von Wassertropfen durch thermische Spannungen oder Brüche in der Sensorkeramik beschädigt oder sogar zerstört werden.

Daher wurden Lambdasonden entwickelt, die eine poröse keramische Schutzschicht an ihrer Oberfläche aufweisen, die auch als Thermo-Shock-Protection-Schicht oder Thermoschockschutzschicht bezeichnet wird. Diese Schutzschicht sorgt dafür, dass auf die Lambdasonde auftreffende Wassertropfen über eine große Fläche verteilt werden und somit die auftretenden lokalen Temperaturgradienten in dem Festkörperelektrolyten bzw. der Sondenkeramik verringert werden. Diese Lambdasonden vertragen im beheizten Zustand also eine gewisse Tropfengröße an Kondenswasser, ohne beschädigt zu werden. Die Schutzschicht wird üblicherweise in einem zusätzlichen Verfahrensschritt auf das Sensorelement aufgebracht. Verschiedene Materialien, wie beispielsweise Aluminiumoxid oder Spinell (MgAl₂O₄), und Auftragtechniken, wie beispielsweise Sprüh- oder Tauchprozesse, sind hierfür im Einsatz. Beispielsweise ist bekannt, eine gleichmäßig dicke Thermoschockschutzschicht aus porösem Aluminiumoxid mittels atmosphärischen Plasmaspritzens aufzubringen. Mit einem derartigen thermischen Beschichtungsprozess werden eingebrachte Partikel aufgeschmolzen und auf die Festelektrolytoberfläche beschleunigt, sodass die Thermoschockschutzschicht auf der ganzen Festelektrolytoberfläche aufgetragen wird. Diese vermindert im Niedertemperaturbereich, d.h. in einem Temperaturbereich von ungefähr 300 °C bis 400 °C, durch seine begrenzte Permeabilität den Wasserzutritt zum Festelektrolyten des Sensorelements, der zumindest teilweise aus Zirkoniumdioxid hergestellt ist, und begrenzt im Hochtemperaturbereich, d.h. in einem Temperaturbereich von ungefähr 400 °C bis 600 °C, die Abkühlung über Wärmeleitung. Bei höheren Temperaturen verhindert der Leidenfrost-Effekt die Abkühlung.

DE 10 2012 202716 A1 offenbart ein Gassensorelement mit einer mehrlagigen porösen Schutzschicht, die aus einem Innenbereich mit hoher Porosität, einem Zwischenbereich und einem Außenbereich mit niedrigerer Porosität zusammengesetzt ist. Es werden unterschiedliche Schlämme für die Bildung des Innen- und Außenbereichs verwendet.

US 2010/243445 A1 offenbart eine Herstellungsmethode für ein Gassensorelement mit einer mehrlagigen Schutzschicht. Durch Beigabe unterschiedlicher Mengen an Porenformer wird dabei die Porosität der unterschiedlichen Schichten eingestellt. Die Porosität kann von innen nach außen sowohl zu- als auch abnehmen.

US 2010/155240 A1 offenbart ein Gassensorelement mit einer zweilagigen Schutzschicht, wobei sich die Schichten in ihrer Materialzusammensetzung und ihrer Wechselwirkung mit Wasser unterscheiden. Es werden unterschiedliche Partikel für die jeweiligen Schichten verwendet.

EP 1 775 580 A1 offenbart ein Gassensorelement mit einer zweilagigen porösen Schutzschicht, die aus unterschiedlichen Materialien aufgebracht werden.

US 5 271 821 A offenbart ein Gassensorelement mit einer einlagigen Schutzschicht. Durch das thermische Behandeln der Schutzschicht während des Herstellens wird die Oberfläche der Schutzschicht deaktiviert, da die einzelnen Komponenten über ihren Schmelzpunkt hinweg erhitzt werden.

Trotz der zahlreichen Vorteile der aus dem Stand der Technik bekannten Verfahren zur Herstellung von Sensorelementen für Lambdasonden beinhalten diese noch Verbesserungspotenzial. Um die Funktionalität des Sensorelements nicht zu beeinflussen und es gleichzeitig zuverlässig vor Wassertropfen, wie beispielsweise aus dem Abgasstrom einer Brennkraftmaschine zu schützen, müssen die Dicke und die Porosität der Thermoschockschutzschicht optimal gewählt werden. Dabei ergeben sich bei der Optimierung des Sensorelements in Bezug auf die beiden genannten Einflussgrößen verschiedene Zielkonflikte. So schützt eine dicke Thermoschockschutzschicht zuverlässig vor Wasserschlag, beeinflusst jedoch als zusätzliche Masse das Aufheizverhalten des Sensorelements ungünstig. Die Thermoschockschutzschicht beeinträchtigt die Dynamik der Lambdasonde. Des Weiteren kann die Verwendung von Aluminiumoxid als gut wärmeleitfähiges Thermoschockschutzschichtmaterial zu einem erhöhten Wärmeaustrag aus dem Sensorelement führen. Eine Verschlankung des keramischen Trägers schließlich ermöglicht zwar schnellere Aufheizzeiten, macht das Sensorelement jedoch mechanisch fragiler. Ferner sind die gespritzten Schichten relativ inhomogen, wodurch die Schichten dicker als notwendig gespritzt werden müssen, um ausreichend thermoschockstabil zu sein. Ferner ändert sich die offene Porosität von plasmagespritzten Schichten infolge thermischer Alterung, so dass die Funktion sowohl von Sprungsonden als auch bei Breitbandsonden mit abgedecktem Gaszutrittsloch beeinträchtigt wird. Die Anbindung zwischen dem Sensorelement und der Schicht ist nur hinreichend gut durch den Eigenverbund der Thermoschockschutzschicht gegeben. Außerdem stellt die Thermoschockschutzschicht eine zusätzliche Diffusionsbarriere dar, durch die das Messgas, das beispielsweise Wasserdampf und Kohlenstoffdioxid enthält, diffundieren muss, um an die äußere Elektrode zu gelangen

### Offenbarung der Erfindung

Es wird daher ein Verfahren zur Herstellung eines Sensorelements zur Erfassung mindestens einer Eigenschaft eines Messgases in einem Messgasraum vorgeschlagen, welches die Nachteile bekannter Verfahren zumindest weitgehend vermeidet, bei denen die Robustheit gegenüber Thermoschock verbessert werden kann, ohne die thermische Masse zu erhöhen, und keine Vorschädigung erzeugt wird.

Das erfindungsgemäße Verfahren ist in Anspruch 1 definiert und umfasst die folgenden Schritte:
- Bereitstellen mindestens eines Festelektrolyten mit mindestens einem Funktionselement,
- zumindest abschnittsweises Aufbringen mindestens einer ersten Schicht aus einem keramischen Material auf den Festelektrolyten, wobei die erste Schicht nach dem Aufbringen eine erste Porosität aufweist, und
- Bilden einer zweiten Schicht (44) die eine zweite Porosität aufweist, durch Anschmelzen der dem Festelektrolyten (12) abgewandten Oberfläche der ersten Schicht (42) unter Verwendung eines Plasmabrenners

Weitere Details des Verfahrens sind in den abhängigen Ansprüchen aufgeführt.

Die erste Schicht kann durch thermisches Spritzen, wie beispielsweise Plasmaspritzen, Tauchen, Sprühen, Druck- oder Rakelverfahren hergestellt oder aufgebracht werden. Es können eine oder mehrere Schichten auf das gesinterte Sensorelement aufgebracht werden. Es können eine oder mehrere Schichten auf das ungesinterte Sensorelement aufgebracht werden. Die erste Schicht kann aus einem Sol hergestellt werden. Beispielsweise wird für die Tauch- und/oder Sprühbeschichtung ein Keramikschlicker oder ein Sol mit keramischen Füllstoffen verwendet. Das Verfahren kann weiterhin mindestens einen thermischen Behandlungsschritt des Festelektrolyten nach dem Aufbringen der Sprüh- und/oder Tauchbeschichtung umfassen. Der thermische Behandlungsschritt kann bei einer Temperatur von 40 °C bis 120 °C und bevorzugt von 50 °C bis 100 °C durchgeführt werden, beispielsweise 75 °C. Der Temperschritt kann bei einer Temperatur von 1000 °C bis 1300 °C und bevorzugt von 1100 °C bis 1200 °C durchgeführt werden, beispielsweise 1150 °C. Der Festelektrolyt kann weiterhin ein Heizelement zum Erwärmen des Festelektrolyten umfassen, wobei das Heizelement den Temperschritt durchführt. Die erste Schicht kann mittels atmosphärischen Plasmaspritzens aufgebracht werden.

Unter einem Festelektrolyten ist im Rahmen der vorliegenden Erfindung ein Körper oder Gegenstand mit elektrolytischen Eigenschaften, also mit ionenleitenden Eigenschaften, zu verstehen. Insbesondere kann es sich um einen keramischen Festelektrolyten handeln. Dies umfasst auch das Rohmaterial eines Festelektrolyten und daher die Ausbildung als so genannter Grünling oder Braunling, die erst nach einem Sintern zu einem Festelektrolyten werden.

Unter einem Funktionselement ist im Rahmen der vorliegenden Erfindung ein Element zu verstehen, das ausgewählt ist aus der Gruppe bestehend aus: Elektrode, Leiterbahn, Diffusionsbarriere, Diffusionsspalt, Referenzgaskanal, Heizelement, Nernstzelle und Pumpzelle. Insbesondere sind darunter diejenigen Elemente zu verstehen, die die wesentlichen chemischen und/oder physikalischen und/oder elektrischen und/oder elektrochemischen Funktionen einer Lambdasonde erfüllen.

Unter einem Sol ist im Rahmen der vorliegenden Erfindung eine kolloidale Dispersion aus Präkursoren keramischer Materialien und insbesondere von Metalloxiden zu verstehen. Bei den Präkursoren von Metalloxiden handelt es im Rahmen der vorliegenden Erfindung insbesondere um Metallalkoholate und Metallcarboxylate. Derartige Präkursoren werden durch thermische Behandlung zu Metalloxiden umgewandelt. Die dabei ablaufenden Grundreaktionen sind Hydrolyse und Kondensation. Aus Metallalkoholaten und Wasser entstehen unter Abspaltung von Alkoholmolekülen Metallhydroxid-Gruppen. Analoge Reaktionen lassen sich für Metallcarboxylate oder -diketonate formulieren, wobei diese Gruppen jedoch eine deutlich höhere hydrolytische Stabilität aufweisen. Die Metallhydroxid-Gruppen hydrolysierter Präkursormoleküle kondensieren unter Wasserabspaltung miteinander. Aus dem Dimer entstehen in der Art einer anorganischen Polykondensationsreaktion Trimere, Tetramere und weitere Oligomere, bis sich schließlich ein Partikel gebildet hat. Je nach Lösungsmittel unterscheidet man zwischen alkoholischen Solen und Hydrosolen, wobei im Rahmen der vorliegenden Erfindung insbesondere Hydrosole einsetzbar sind. Fortschreitendes Partikelwachstum und die Aggregation von Solteilchen zu Sekundärpartikeln führen zu einem Anstieg der Viskosität. Sobald sich ein Netzwerk aus Solpartikeln gebildet hat, spricht man von Gelierung. Das viskos fließende Sol ist folglich in einen viskoelastischen Festkörper übergegangen. Das Gel besteht aus dem Gelgerüst und den von ihm eingeschlossenen Lösungsmitteln, wobei jedoch alle Poren miteinander in Verbindung stehen. Ein Beispiel für ein Sol, das im Rahmen der vorliegenden Erfindung verwendet werden kann, ist in der DE 10 2006 011 224 B4 beschrieben.

Unter einer abschnittsweisen Aufbringung der Beschichtung ist im Rahmen der vorliegenden Erfindung ein Aufbringen der Beschichtung zu verstehen, bei dem eine Außenfläche oder Oberfläche des Festelektrolyten oder eine bereits darauf aufgebrachte Schicht von der nachfolgenden Schicht zumindest teilweise bedeckt wird, ohne dass diese notwendigerweise vollständig bedeckt werden. Es ist daher möglich, die Beschichtung nur auf bestimmten Abschnitten des Festelektrolyten aufzubringen, wie beispielsweise nur auf bestimmten Seitenflächen oder Seitenkanten, oder nur in einem bestimmten Bereich des Festelektrolyten, der sich beispielsweise in einer Längserstreckungsrichtung des Sensorelements gesehen weiter in dem Messgasraum befindet als andere Bereiche des Festelektrolyten.

Unter einer Porosität ist im Rahmen der vorliegenden Erfindung das Verhältnis von Hohlraumvolumen zu Gesamtvolumen eines Stoffes oder Stoffgemisches als dimensionslose Messgröße zu verstehen. Diese Messgröße kann insbesondere in Prozent angegeben werden. Unter einer offenen Porosität ist dabei der Anteil des Hohlraumvolumens derjenigen Hohlräume am Gesamthohlraumvolumen zu verstehen, die untereinander und mit der Umgebungsluft in Verbindung stehen. Unter einer bestimmten Porosität ist dabei eine Porosität von mindestens 20 %, bevorzugt mindestens 30 % und noch bevorzugter mindestens 40 % zu verstehen, wie beispielsweise 60 %. Eine Porosität oberhalb von 80 % wird dabei aus technischen Gründen nicht umfasst, da diese die Stabilität der Schicht herabsetzen kann.

Unter einem Temperschritt ist im Rahmen der vorliegenden Erfindung das Erhitzen des Festelektrolyten und des Sols beziehungsweise des Keramikschlickers auf eine Temperatur unterhalb der Schmelztemperatur der Materialien des Festelektrolyten und des Sols zu verstehen.

Unter einem Porenbildner ist im Rahmen der vorliegenden Erfindung jedes Material zu verstehen, das eingerichtet ist, die durch Tauchen oder Sprühen aufgebrachte keramische Schicht porös und leichter zu machen. Dies sind beispielsweise Säge- und Korkmehl, Stärke, Kohlenstaub, Polymerkugeln oder Polymerfasern, insbesondere Kurzfasern. Insbesondere sind darunter kohlenstoffbasierte Materialien zu verstehen, die beim so genannten Sintern verbrennen und dabei Hohlräume hinterlassen.

Ein Grundgedanke der vorliegenden Erfindung ist, eine mehrlagige bzw. mehrschichtige Thermoschockschutzschicht zu schaffen, die optimal an bestimmte Anforderungen angepasst werden kann, wie beispielsweise Thermoschockschutz, Wärmeleitfähigkeit, Wärmekapazität, Wasserpermeabilität, Benetzbarkeit. Durch die Thermoschockschutzschicht werden die Eigenschaften der einzelnen Schichten so eingestellt, dass die Beeinträchtigung der Funktion des Sensorelements weitgehend vermieden oder reduziert wird. Vor Allem ergeben sich Vorteile bei der Fast-Light-Off-Zeit und beim Heizspannungsbedarf. Die mittlere Schichtdicke bei herkömmlichen Thermoschockschutzschichten muss aufgrund der hohen Schwankungen der Schichtdicke erhöht werden, damit die notwendige Mindestschichtdicke gewährleistet ist. Somit erhöht sich die Wärmekapazität bei herkömmlichen Sensorelementen derart, dass das schnelle Einschalten des Sensorelements, d. h. das so genannte Fast-Light-Off, verschlechtert wird, beispielsweise um ungefähr 2,2 Sekunden oder 1,4 Sekunden in Abhängigkeit von dem jeweiligen Sensormodell.

Durch die Herstellung einer Thermoschockschutzschicht aus mehreren einzelnen Schichten, die optimal an spezielle Anforderungen angepasst werden, wie beispielsweise Thermoschockschutz, Wärmeleitfähigkeit, Wasserpermeabilität, Wärmekapazität, Benetzbarkeit kann die Beeinträchtigung der Funktion und Dynamik der Lambdasonde durch die aufgebrachte Thermoschockschutzschicht verringert werden. Die Schichten unterscheiden sich durch ihre Porosität.

Durch die Verwendung einer dünnen, feinporösen äußeren Schicht kann die Permeabilität von Wasser reduziert werden, d. h. die Schicht wird hydrophob, ohne dass der Messgaszutritt zu den Messelektroden in unzulässiger Weise verringert wird. Mit anderen Worten weist die äußere Schicht die Funktion einer Membran auf. Insbesondere wird der Einzugsbereich einer Gaszutrittsöffnung der Grundkeramik des Sensorelements durch die grobporöse innere Schicht der Thermoschockschutzschicht erheblich vergrößert und damit die Gaszutrittsbeschränkung durch die äußere, vergleichsweise dichtere Thermoschockschutzschicht wirksam verkleinert. Dadurch ergeben sich bei einer Fertigungsstreuung der Permeabilität der äußeren Schicht nur noch geringere Streuungen des Gaszutritts und damit der Kennliniensteigung des Sensorelements.

Ein weiterer Grundgedanke der Erfindung ist, die Thermoschockschutzschicht durch anorganische poröse Schichten auf keramischen Abgassensoren zu optimieren. Das Gefüge der Thermoschockschutzschicht wird dabei gezielt an die Dynamik und den Thermoschockschutz angepasst. Vorteilhaft ist insbesondere die Ausführung der Thermoschockschutzschicht, bei der die innere Schicht eine hohe Porosität aufweist. Dies sollte durch die gleichmäßige Verteilung großer Poren erreicht werden. Die äußere Schicht der Thermoschockschutzschicht besteht aus einer Schicht mit geringerer, fein verteilter Porosität. Die hohe Porosität der inneren Thermoschockschutzschicht stellt demnach eine sehr gute thermische Isolierung zwischen dem Festelektrolyten und der restlichen Thermoschockschutzschicht dar, da die Wärmeleitfähigkeit durch den hohen Porenanteil, die viel Luft enthalten, gering gegenüber dem Festelektrolyten ist. Dadurch kann der Festelektrolyt schneller aufgeheizt werden, d. h. es wird eine kürzere Fast-Light-Off-Zeit erreicht, da die Masse der Thermoschockschutzschicht vom Festelektrolyten thermisch entkoppelt ist. Die Entkopplung der thermischen Massen der Thermoschockschutzschicht vom Festelektrolyten bewirkt außerdem einen niedrigeren Heizspannungsbedarf, da die Auskühlung der Thermoschockschutzschicht nicht direkt auf die Oberfläche des Festelektrolyten übertragen wird. Durch die Einstellung einer feinen Porosität der äußeren Schicht wird eine glatte Oberfläche mit geringerer Rauheit erreicht. Dies verhindert das Eindringen von Wasser in die Schutzschicht, was die Fast-Light-Off-Zeit erhöhen würde. Durch die verringerte Wasserpermeabilität durch Herstellung einer glatten Oberfläche besteht zudem eine bessere Thermoschockrobustheit. Um in die Thermoschockschutzschicht eingedrungenes Wasser beim schnellen Aufheizen des Festelektrolyten entweichen lassen zu können, muss die äußere Schicht, die als Membran wirkt, einerseits mechanisch stabil sein, um dem schnell ansteigenden Druck des Wasserdampfes widerstehen zu können, und andererseits hinreichend porös sein, den Wasserdampf von innen nach außen passieren zu lassen.

Die Realisierung eines gradierten Thermoschockschutzes besteht in der Aufbringung einer hochporösen suspensionsgespritzten Schicht, deren Oberfläche in einem zweiten Schritt durch eine thermische Behandlung in der Flamme eines Plasmabrenners angeschmolzen wird. Dies führt zu einer Reduzierung der Permeabilität an der Oberfläche der Thermoschockschutzschicht.

Ein derartiger mehrlagiger Thermoschockschutz lässt sich mittels optischer Analyse und Schliffproben einer Lambdasonde nachweisen.

### Kurze Beschreibung der Zeichnungen

Weitere optionale Einzelheiten und Merkmale der Erfindung ergeben sich aus der nachfolgenden Beschreibung bevorzugter Ausführungsbeispiele, welche in den Figuren schematisch dargestellt sind.

Es zeigen:
- Figur 1: eine Längsschnittansicht eines beispielhaften Sensorelements,
- Figur 2: eine Querschnittsansicht eines beispielhaften Sensorelements im Bereich eines Gaszutrittslochs,
- Figur 3: eine vergrößerte Querschnittsansicht eines beispielhaften Sensorelements im Bereich eines Gaszutrittslochs,
- Figur 4: eine Draufsicht eines beispielhaften Sensorelements im Bereich eines Gaszutrittslochs und
- Figur 5: eine vergrößerte Darstellung eines Ausschnitts eines beispielhaften Sensorelements im Bereich einer Seitenkante mit der Thermoschockschutzschicht.

### Ausführungsformen der Erfindung

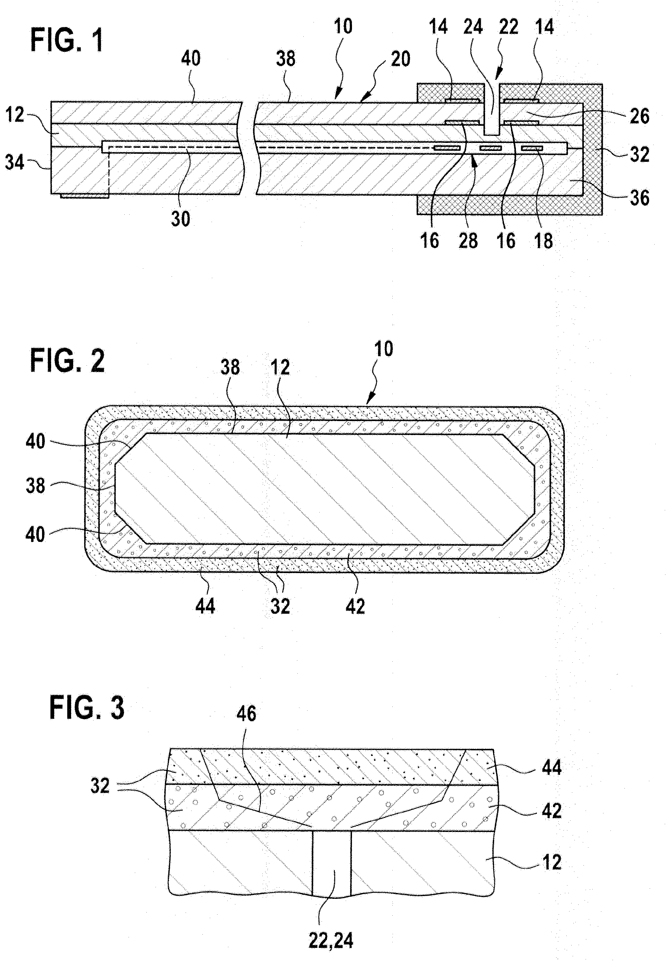

Das in Figur 1 dargestellte Sensorelement 10 kann zum Nachweis von physikalischen und/oder chemischen Eigenschaften eines Messgases verwendet werden, wobei eine oder mehrere Eigenschaften erfasst werden können. Die Erfindung wird im Folgenden insbesondere unter Bezugnahme auf eine qualitative und/oder quantitative Erfassung einer Gaskomponente des Gases beschrieben, insbesondere unter Bezugnahme auf eine Erfassung eines Sauerstoffanteils in dem Messgas. Der Sauerstoffanteil kann beispielsweise in Form eines Partialdrucks und/oder in Form eines Prozentsatzes erfasst werden. Grundsätzlich sind jedoch auch andere Arten von Gaskomponenten erfassbar, beispielsweise Stickoxide, Kohlenwasserstoffe und/oder Wasserstoff. Alternativ oder zusätzlich sind jedoch auch andere Eigenschaften des Messgases erfassbar, wie beispielsweise die Temperatur. Die Erfindung ist insbesondere im Bereich der Kraftfahrzeugtechnik einsetzbar, so dass es sich bei dem Messgasraum insbesondere um einen Abgastrakt einer Brennkraftmaschine handeln kann und bei dem Messgas insbesondere um ein Abgas.

Das Sensorelement 10 als exemplarischer Bestandteil einer planaren Lambdasonde weist einen Festelektrolyten 12 auf. Der Festelektrolyt 12 kann aus mehreren Festelektrolytschichten zusammengesetzt sein oder mehrere Festelektrolytschichten umfassen. Bei dem Festelektrolyten 12 kann es sich insbesondere um einen keramischen Festelektrolyten 12 handeln, wie beispielsweise Zirkoniumdioxid (ZrO₂), insbesondere yttriumstabilisiertes Zirkoniumdioxid (YSZ) und scandiumdotiertes Zirkoniumdioxid (ScSZ), das geringe Zusätze an Aluminiumoxid (Al₂O₃) und/oder Siliziumoxid (SiO₂) enthalten kann. Der Festelektrolyt 12 weist mindestens ein Funktionselement auf. Bei der gezeigten Ausführungsform weist der Festelektrolyt 12 beispielsweise eine erste Elektrode 14, eine zweite Elektrode 16 und ein Heizelement 18 auf. Die erste Elektrode 14 ist auf einer Oberfläche 20 des Festelektrolyten 12 angeordnet. Die zweite Elektrode 16 ist im Inneren des Festelektrolyten 12 angeordnet.

Ferner weist das Sensorelement 10 einen Gaszutrittsweg 22 auf. Der Gaszutrittsweg 22 umfasst ein Gaszutrittsloch 24. Sowohl die erste Elektrode 14 als auch die zweite Elektrode 16 umgeben das Gaszutrittsloch 24, beispielsweise ringförmig. Beispielsweise ist die zweite Elektrode 16 in einem nicht näher gezeigten Elektrodenhohlraum angeordnet, der über einen Kanal mit dem Gaszutrittsloch 24 in Verbindung steht. In dem Kanal ist beispielsweise eine Diffusionsbarriere angeordnet, welche ein Nachströmen von Gas aus dem Messgasraum in den Elektrodenhohlraum vermindert oder sogar verhindert und lediglich eine Diffusion ermöglicht. Über die Diffusionsbarriere ist die zweite Elektrode 16 somit mit Gas aus dem Messgasraum beaufschlagbar. Die erste Elektrode 14 und die zweite Elektrode 16 sind über den Festelektrolyten 12 miteinander verbunden und bilden eine Pumpzelle 26. Über die Diffusionsbarriere lässt sich ein Grenzstrom der Pumpzelle 26 einstellen.

In der Verlängerung der Erstreckungsrichtung des Gaszutrittslochs 24 ist das Heizelement 18 in dem Festelektrolyten 12 angeordnet. Das Heizelement 18 ist zum Erwärmen der Pumpzelle 26 eingerichtet, insbesondere auf eine Temperatur, bei der die Pumpzelle 26 für Ionen, insbesondere für Sauerstoffionen leitfähig ist, wie beispielsweise 750 °C bis 900 °C. Das Heizelement 18 umfasst einen Heizbereich 28 und Anschlussleitungen 30. Beispielsweise ist das Heizelement 18 als elektrisches Widerstandsheizelement ausgeführt und mittels der Anschlussleitungen 30 mit einer elektrischen Spannungsquelle verbindbar.

Ferner kann der Festelektrolyt 12 einen nicht näher gezeigten Referenzgaskanal umfassen. Der Referenzgaskanal kann als makroskopischer Referenzluftkanal ausgebildet sein, in dem Luft mit einer bekannten Eigenschaft, wie beispielsweise einem Sauerstoffpartialdruck, vorliegt. Der Referenzgaskanal kann alternativ als nichtmakroskopischer Kanal ausgeführt sein, sondern als gepumpte Referenz, d.h. als künstliche Referenz. In dem Elektrodenhohlraum ist beispielsweise eine dritte Elektrode angeordnet. Beispielsweise liegt die zweite Elektrode 16 der dritten Elektrode gegenüber. Eine vierte Elektrode kann in dem Referenzgaskanal angeordnet sein oder bei einer gepumpten Referenz auf einer Isolationsschicht im Inneren des Festelektrolyten 12 angeordnet sein. Die dritte Elektrode, die vierte Elektrode und der Teil des Festelektrolyten 12 zwischen diesen bilden eine elektrochemische Zelle, wie beispielsweise eine Nernstzelle. Mittels der Pumpzelle 26 kann beispielsweise ein Pumpstrom durch die Pumpzelle 26 derart eingestellt werden, dass in dem Elektrodenhohlraum die Bedingung λ = 1 oder eine andere bekannte Zusammensetzung herrscht. Diese Zusammensetzung wird wiederum von der Nernstzelle erfasst, indem eine Nernstspannung zwischen der dritten Elektrode und der vierten Elektrode gemessen wird. Anhand der gemessenen Nernstspannung kann auf die Zusammensetzung in dem Elektrodenhohlraum geschlossen werden und der Pumpstrom gegebenenfalls verändert werden, um die Bedingung λ = 1 einzustellen. Anhand des Pumpstroms kann dann auf die Zusammensetzung des Abgases geschlossen werden.

Die optionale Nernstzelle in dem Festelektrolyten 12 ist vorzugsweise vorgesehen, um in einem Verbrennungsabgas den jeweiligen Restsauerstoffgehalt zu messen, um daraus das Verhältnis von Verbrennungsluft zu Kraftstoff für die weitere Verbrennung so regeln zu können, dass weder ein Kraftstoff- noch ein Luftüberschuss auftritt. Da bei kaltem Motor die Temperatur noch weit unter 300 °C liegt, arbeitet die Lambdasonde und damit die Regelung bei Kaltstart nicht oder nur sehr träge. Deshalb ist der Festelektrolyt 12 des Sensorelements 10 vorzugsweise mit dem elektrischen Heizelement 18 ausgestattet, so dass die Sonde bereits kurz nach dem Kaltstarten auf die erforderliche Temperatur gebracht werden kann. Dadurch ist es möglich, bereits in der Warmlaufphase des Motors einen emissionsoptimierten Betrieb zu gewährleisten. Da der Betrieb einer Lambdasonde hinreichend bekannt ist, beispielsweise aus dem oben genannten Stand der Technik, wird auf eine detaillierte Beschreibung der Funktionsweise verzichtet.

Das Sensorelement 10 umfasst ferner eine Thermoschockschutzschicht 32. Die Thermoschockschutzschicht 32 kann zumindest teilweise aus einem keramischen Material hergestellt sein. Beispielsweise enthält die Thermoschockschutzschicht 32 poröses Aluminiumoxid. Beispielsweise weist die Thermoschockschutzschicht 32 eine Porosität von 50 % auf. Der Festelektrolyt 12 erstreckt sich entlang einer Längserstreckungsrichtung in den Messgasraum, die bezogen auf die Darstellung der Figur 1 von links nach rechts verläuft. Folglich umfasst das Sensorelement 10 ein anschlussseitiges Ende 34, das sich bezogen auf die Darstellung der Figur 1 links befindet, und ein messgasraumseitiges Ende 36, das sich bezogen auf die Darstellung der Figur 1 rechts befindet. Wie in Figur 1 gezeigt, befindet sich die Pumpzelle 26 in der Nähe des messgasraumseitigen Endes 36. Ferner umfasst der Festelektrolyt 12 Seitenflächen 38, von denen eine die Oberfläche 20 ist und die auch Stirnflächen umfassen, und Seitenkanten 40, die die Seitenflächen 38 miteinander verbinden bzw. einen Übergang zwischen den Seitenflächen 38 bilden. Die Seitenkanten 40 können abgerundet, eckig oder gefast ausgebildet sein. Die Thermoschockschutzschicht 32 ist zumindest abschnittsweise auf den Festelektrolyten 12 aufgebracht. Beispielsweise ist die Thermoschockschutzschicht 32 nur in einem Drittel bezogen auf eine Abmessung in der Längserstreckungsrichtung in der Nähe des messgasraumseitigen Endes 36 aufgebracht und bedeckt dort alle Seitenflächen. Bezogen auf die Darstellung der Figur 1 weist die Thermoschockschutzschicht 32 somit einen U-förmigen Querschnitt auf. Insbesondere überdeckt die Thermoschockschutzschicht 32 die erste Elektrode 14, wobei zwischen der ersten Elektrode 14 und der Thermoschockschutzschicht 32 eine poröse keramische Elektrodenschutzschicht vorgesehen sein kann. Es wird betont, dass das Gaszutrittsloch 24 nicht von der Thermoschockschutzschicht 32 verschlossen ist, sondern freien Zugang zum Messgasraum hat. Die Thermoschockschutzschicht 32 kann auch alternativ alle Seitenflächen 38 vollständig bedecken oder nur die erste Elektrode 14 und das Gaszutrittsloch 24 bedecken. Die genaue Stelle, an der die Thermoschockschutzschicht 32 angeordnet wird, kann in Abhängigkeit von der jeweiligen Verwendung bzw. dem Einsatzort des Sensorelements 10 gewählt werden. Die Thermoschockschutzschicht 32 kann auf Grund des erfindungsgemäßen Herstellungsverfahrens, das nachstehend ausführlich beschrieben wird, dünner als bei herkömmlichen Sensorelementen aus dem Stand der Technik ausgeführt sein. Ferner kann bei gleich bleibenden Dicken gegenüber herkömmlichen Sensorelementen ein verbesserter Thermoschockschutz und eine schnellere Einsatzbereitschaft erreicht werden. So kann beispielsweise eine erste hochporöse Schicht von 200 µm auf das Sensorelement aufgebracht werden, gefolgt von einer 50 µm niederporösen Schicht. Bei herkömmlichen Sensorelementen aus dem Stand der Technik weist die Thermoschockschutzschicht eine übliche Dicke von ungefähr 300 µm auf. Die erfindungsgemäße Thermoschockschutzschicht 32 kann dahingegen eine Dicke von weniger als 300 µm aufweisen, wie beispielsweise eine Dicke von 150 µm bis 300 µm und bevorzugt eine Dicke von 200 µm bis 280 µm, wie beispielsweise 250 µm. Dabei geben die oben genannten Dicken die Gesamtdicke der Thermoschockschutzschicht an, die Dickenverhältnisse zwischen den einzelnen Schichten können in beliebigen Verhältnissen variieren.

Figur 2 zeigt eine Querschnittsdarstellung des Sensorelements 10 senkrecht zu der Längserstreckungsrichtung des Sensorelements 10. Wie aus der Darstellung der Figur 2 zu entnehmen ist, wird die Thermoschockschutzschicht 32 von einer ersten Schicht 42 aus einem keramischen Material und einer zweiten Schicht 44 aus einem keramischen Material gebildet. Die erste Schicht 42 ist auf dem Festelektrolyten 12 angeordnet. In der Schnittebene der Figur 2 umgibt die erste Schicht 42 den Festelektrolyten 12 allseitig und bedeckt somit in der Schnittebene der Figur 2 gesehen die Seitenflächen 38 und die Seitenkanten 40 vollständig. Die zweite Schicht 44 ist auf der ersten Schicht 42 angeordnet. In der Schnittebene der Figur 2 umgibt die zweite Schicht 44 die erste Schicht 42 allseitig. Die erste Schicht 42 ist somit zwischen dem Festelektrolyten 12 und der zweiten Schicht 44 angeordnet. Die erste Schicht 42 weist eine erste Porosität auf. Beispielsweise weist die erste Schicht 42 eine erste Porosität von 40 % bis 80 % auf, wie beispielsweise 50 %. Die zweite Schicht 44 weist eine zweite Porosität auf. Beispielsweise weist die zweite Schicht 44 eine zweite Porosität von 10 % bis 20 % auf, wie beispielsweise 15 %. Die erste Schicht 42 unterscheidet sich von der zweiten Schicht 44 hinsichtlich mindestens einer Materialeigenschaft. Die Materialeigenschaft ist ausgewählt aus der Gruppe bestehend aus: Porosität, Wärmeleitfähigkeit, Wärmeausdehnungskoeffizient, Wärmekapazität und Benetzbarkeit. Gemäß den obigen Ausführungen, ist die erste Porosität höher ist als die zweite Porosität. Es wird explizit betont, dass die erste Schicht 42 und die zweite Schicht 44 so hergestellt sein können, dass ein stufenloser Übergang der Porosität zwischen diesen und somit ein Porositätsgradient gebildet wird. Die erste Schicht 42 kann dicker als die zweite Schicht 44 sein. Beispielsweise weist die erste Schicht 42 eine Dicke von 170 µm und die zweite Schicht 44 eine Dicke von 80 µm auf.

Die erste Schicht 42 und die zweite Schicht 44 sind aus identischen Materialien hergestellt, die bei der Herstellung unterschiedlich behandelt werden, wie nachstehend noch ausführlicher beschrieben wird.

Die Figur 3 ist eine vergrößerte Querschnittsansicht des Sensorelements 10 im Bereich des Gaszutrittslochs 24. Durch eine Linie 46 ist ein Eintrittsbereich für das Messgas zu dem Gaszutrittsloch 24 angegeben. Dadurch, dass die erste Porosität der ersten Schicht 42 höher ist als die zweite Porosität der zweiten Schicht 44, ist der Eintrittsbereich innerhalb der ersten Schicht 42 stark vergrößert und nimmt mit seiner Fläche aber innerhalb der zweiten Schicht 44 aufgrund der niedrigeren zweiten Porosität nur wenig zu.

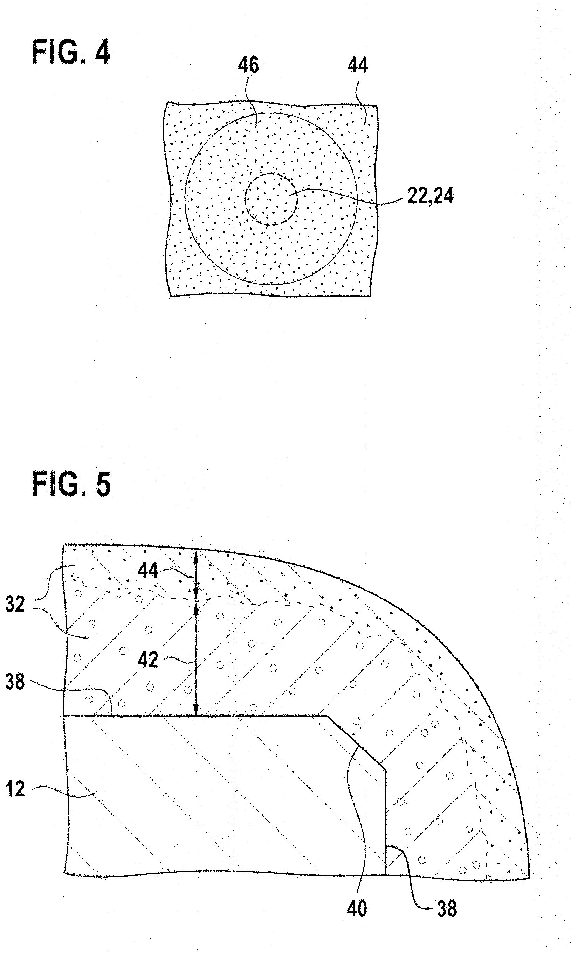

Die Figur 4 ist eine Draufsicht des Sensorelements 10 im Bereich des Gaszutrittslochs 24. Gut zu erkennen ist die stark vergrößerte Fläche des Eintrittsbereichs 46. Die hohe Porosität der ersten Schicht 42 stellt demnach eine sehr gute thermische Isolierung zwischen dem Festelektrolyten 12 und der zweiten Schicht 44 dar, da die Wärmeleitfähigkeit durch den hohen Porenanteil, die viel Luft enthalten, gering gegenüber dem Festelektrolyten 12 ist. Dadurch kann der Festelektrolyt 12 schneller aufgeheizt werden, d. h. es wird eine kürzere Fast-Light-Off-Zeit erreicht, da die Masse der Thermoschockschutzschicht 32 vom Festelektrolyten 12 thermisch entkoppelt ist. Die Entkopplung der thermischen Massen der Thermoschockschutzschicht 32 vom Festelektrolyten 12 bewirkt außerdem einen niedrigeren Heizspannungsbedarf, da die Auskühlung der Thermoschockschutzschicht 32 nicht direkt auf die Oberfläche des Festelektrolyten 12 übertragen wird. Durch die Einstellung einer feinen bzw. niedrigen Porosität der zweiten Schicht 44 wird eine glatte Oberfläche mit geringerer Rauheit erreicht. Dies verhindert das Eindringen von Wasser in die zweite Schicht 44, was die Fast-Light-Off-Zeit erhöhen würde. Durch die verringerte Wasserpermeabilität durch Herstellung einer glatten Oberfläche besteht zudem eine bessere Thermoschockrobustheit. Um in die Thermoschockschutzschicht 32 eingedrungenes Wasser beim schnellen Aufheizen des Festelektrolyten 12 entweichen lassen zu können, ist die zweite Schicht 44, die als Membran wirkt, durch das nachstehend beschriebene Herstellungsverfahren einerseits mechanisch stabil, um dem schnell ansteigenden Druck des Wasserdampfes widerstehen zu können, und andererseits hinreichend porös, um den Wasserdampf von innen nach außen passieren zu lassen. Insbesondere wird der Einzugsbereich bzw. der Eintrittsbereich 46 des Gaszutrittslochs 24 des Sensorelements 10 durch die grobporöse innere bzw. erste Schicht 42 der Thermoschockschutzschicht 32 erheblich vergrößert und damit die Gaszutrittsbeschränkung durch die äußere bzw. zweite, vergleichsweise dichtere Schicht 44 wirksam verkleinert. Dadurch ergeben sich bei einer Fertigungsstreuung der Permeabilität der ersten Schicht 42 nur noch geringere Streuungen des Gaszutritts und damit der Kennliniensteigung des Sensorelements 10.

Das Sensorelement 10 kann erfindungsgemäß wie folgt hergestellt werden. Zunächst wird ein Festelektrolyt 12 mit den oben genannten Funktionselementen 14, 16 und 18 bereitgestellt. Beispielsweise wird der Festelektrolyt 12 aus mehreren Festelektrolytschichten hergestellt, die mit den oben genannten Funktionselementen in an sich bekannter Weise bedruckt werden, d.h. mit der ersten Elektrode 14, der zweiten Elektrode 16 und dem Heizelement 18. Bekannte Techniken sind beispielsweise die so genannten Folientechnik oder Mehrlagentechnik. Anschließend wird der Festelektrolyt 12 mit der ersten Elektrode 14, der zweiten Elektrode 16 und dem Heizelement 18 gemeinsam gesintert. Das Sintern kann beispielsweise bei einer Temperatur zwischen 1350 °C bis 1550 °C, insbesondere bei 1385 °C, erfolgen, wobei die Temperatur für beispielsweise 5,5 Stunden konstant gehalten wird. Eine derartige Ausbildung eines planaren Sensorelements 10 ist hinreichend aus dem oben genannten Stand der Technik bekannt, so dass nicht näher darauf eingegangen wird.

Des Weiteren wird eine erste Thermoschockschutzschicht 42 durch Plasmaspritzen aufgebracht, wobei verschiedene Metalloxide verwendet werden können, beispielsweise Aluminiumoxid und Zirkoniumdioxid.

Die Oberfläche der ersten Schicht 42, d.h. diejenige Seite, die dem Festelektrolyten 12 abgewandt ist, wird in einem zweiten Schritt durch eine thermische Behandlung in der Flamme eines Plasmabrenners angeschmolzen. Der Abstand des Plasmabrenners, dessen Plasma eine Temperatur von 10000 °C bis 20000 °C aufweisen kann, wird dabei so eingestellt, dass die Temperatur auf der Oberfläche der ersten Schicht 42 ungefähr 2000 °C ist. Dies führt zu einer Reduzierung der Permeabilität an der Oberfläche der Thermoschockschutzschicht 32 und die zweite Schicht 44 wird aus der ersten Schicht 42 gebildet.

Figur 5 zeigt eine vergrößerte Darstellung eines Ausschnitts eines beispielhaften Sensorelements 10 im Bereich einer Seitenkante 40 mit der Thermoschockschutzschicht 32, die aus einer plasmagespritzten ersten Schicht 42 und einer zweiten Schicht 44 gebildet wird. Zu erkennen ist, dass die erste Schicht 42 dicker als die zweite Schicht 44 ist. Beispielsweise weist die erste Schicht 42 eine Dicke von 170 µm auf und die zweite Schicht 44 weist eine Dicke von 80 µm auf.

## Patentansprüche

1. Verfahren zum Herstellen eines Sensorelements (10) zur Erfassung mindestens einer Eigenschaft eines Messgases in einem Messgasraum, insbesondere zum Nachweis eines Anteils einer Gaskomponente in dem Messgas oder einer Temperatur des Messgases, umfassend die Schritte:
- Bereitstellen mindestens eines Festelektrolyten (12) mit mindestens einem Funktionselement (14, 16, 18),
- zumindest abschnittsweises Aufbringen mindestens einer ersten Schicht (42) aus einem keramischen Material auf den Festelektrolyten (12), wobei die erste Schicht (42) nach dem Aufbringen eine erste Porosität aufweist, und
- Bilden einer zweiten Schicht (44) die eine zweite Porosität aufweist, durch Anschmelzen der dem Festelektrolyten (12) abgewandten Oberfläche der ersten Schicht (42) unter Verwendung eines Plasmabrenners.

2. Verfahren nach einem der vorhergehenden Ansprüche, wobei die erste Schicht (42) durch Plasmaspritzen, Sprühen, Tauchen, Druck- oder Rakelverfahren aufgebracht wird.

3. Verfahren nach einem der vorhergehenden Ansprüche, wobei eine oder mehrere Schichten auf das gesinterte Sensorelement (10) aufgebracht werden.

4. Verfahren nach einem der Ansprüche 1 bis 3, wobei eine oder mehrere Schichten auf das ungesinterte Sensorelement (10) aufgebracht werden.

5. Verfahren nach dem vorhergehenden Anspruch, wobei die erste Schicht (42) aus einem Sol hergestellt wird.

6. Verfahren nach dem vorhergehenden Anspruch, wobei das Verfahren weiterhin mindestens einen thermischen Behandlungsschritt des Festelektrolyten (12) nach dem Aufbringen des Sols umfasst.

7. Verfahren nach einem der beiden vorhergehenden Ansprüche, wobei das Verfahren weiterhin mindestens einen Temperschritt des Festelektrolyten (12) nach dem Aufbringen des Sols umfasst.

8. Verfahren nach dem vorhergehenden Anspruch, wobei der Festelektrolyt (12) weiterhin ein Heizelement (18) zum Erwärmen des Festelektrolyten (12) umfasst, wobei das Heizelement (18) den Temperschritt durchführt.

9. Verfahren nach einem der vorhergehenden Ansprüche, wobei die erste Schicht (42) mittels atmosphärischen Plasmasprühens aufgebracht wird.

## Claims

1. Method of producing a sensor element (10) for detecting at least one property of an analysis gas in an analysis gas space, especially for detecting a proportion of a gas component in the analysis gas or a temperature of the analysis gas, comprising the steps of:
- providing at least one solid-state electrolyte (12) with at least one functional element (14, 16, 18),
- applying at least one first layer (42) of a ceramic material at least to sections of the solid-state electrolyte (12), wherein the first layer (42) has a first porosity after the application, and
- forming a second layer (44) having a second porosity by partly melting the surface of the first layer (42) remote from the solid-state electrolyte (12) using a plasma burner.

2. Method according to any of the preceding claims, wherein the first layer (42) is applied by plasma spraying, spraying, dipping, or printing or knife-coating methods.

3. Method according to any of the preceding claims, wherein one or more layers are applied to the sintered sensor element (10).

4. Method according to any of Claims 1 to 3, wherein one or more layers are applied to the unsintered sensor element (10).

5. Method according to the preceding claim, wherein the first layer (42) is produced from a sol.

6. Method according to the preceding claim, wherein the method further comprises at least one step of thermal treatment of the solid-state electrolyte (12) after the applying of the sol.

7. Method according to either of the two preceding claims, wherein the method further comprises at least one step of heat treatment of the solid-state electrolyte (12) after the applying of the sol.

8. Method according to the preceding claim, wherein the solid-state electrolyte (12) further comprises a heating element (18) for heating of the solid-state electrolyte (12), wherein the heating element (18) performs the heat treatment step.

9. Method according to the preceding claim, wherein the first layer (42) is applied by means of atmospheric plasma spraying.

## Revendications

1. Procédé de fabrication d'un élément détecteur (10) pour détecter au moins une propriété d'un gaz de mesure dans une chambre à gaz de mesure, en particulier pour déterminer une fraction d'un composant de gaz dans le gaz de mesure ou une température du gaz de mesure, comprenant les étapes consistant à :
- préparer au moins un électrolyte solide (12) comprenant au moins un élément fonctionnel (14, 16, 18),
- appliquer au moins par endroits au moins une première couche (42) d'un matériau céramique sur l'électrolyte solide (12), la première couche (42) présentant une première porosité après l'application, et
- former une deuxième couche (44) qui présente une deuxième porosité en fusionnant la surface, détournée de l'électrolyte solide (12), de la première couche (42) à l'aide d'une torche à plasma.

2. Procédé selon l'une quelconque des revendications précédentes, dans lequel la première couche (42) est appliquée par projection de plasma, par pulvérisation, par immersion, par un procédé d'impression ou de raclage.

3. Procédé selon l'une quelconque des revendications précédentes, dans lequel une ou plusieurs couches sont appliquées sur l'élément détecteur fritté (10).

4. Procédé selon l'une quelconque des revendications 1 à 3, dans lequel une ou plusieurs couches sont appliquées sur l'élément détecteur non fritté (10).

5. Procédé selon la revendication précédente, dans lequel la première couche (42) est réalisée à partir d'un sol.

6. Procédé selon la revendication précédente, le procédé comprenant en outre au moins une étape de traitement thermique de l'électrolyte solide (12) après l'application du sol.

7. Procédé selon l'une des deux revendications précédentes, le procédé comprenant en outre au moins une étape de recuit de l'électrolyte solide (12) après l'application du sol.

8. Procédé selon la revendication précédente, dans lequel l'électrolyte solide (12) comprend en outre un élément chauffant (18) pour chauffer l'électrolyte solide (12), l'élément chauffant (18) effectuant l'étape de recuit.

9. Procédé selon l'une quelconque des revendications précédentes, dans lequel la première couche (42) est appliquée au moyen d'une pulvérisation atmosphérique au plasma.
